Europäisches Patentamt

European Patent Office

Office européen des brevets

(19)

(11) Numéro de publication: **0 097 597**
A2

(12) **DEMANDE DE BREVET EUROPEEN**

(21) Numéro de dépôt: 83401283.3

(22) Date de dépôt: 21.06.83

(51) Int. Cl.³: **G 01 N 13/00**
G 03 B 39/00, G 01 P 5/00
B 01 F 3/08

(30) Priorité: 23.06.82 FR 8210974

(43) Date de publication de la demande:
04.01.84 Bulletin 84/1

(84) Etats contractants désignés:
DE GB IT

(71) Demandeur: COMMISSARIAT A L'ENERGIE ATOMIQUE
Etablissement de Caractère Scientifique Technique et
Industriel
31/33, rue de la Fédération
F-75015 Paris(FR)

(72) Inventeur: Gillier, Hugues
63, rue des Cévennes
F-75015 Paris(FR)

(72) Inventeur: Redasse, Jean-Claude
3, rue Poniatowski
F-93130 Noisy-Le-Sec(FR)

(72) Inventeur: Renaut, Maurice
22, rue Blanche
F-93600 Aulnay Sous Bois(FR)

(74) Mandataire: Mongrédien, André et al,
c/o BREVATOME 25, rue de Ponthieu
F-75008 Paris(FR)

(54) Appareillage pour l'observation optique des phénomènes de mélanges provoqués par instabilités entre deux fluides.

(57) L'appareillage permet l'étude du mélange d'un fluide léger avec un fluide plus lourd soumis à une forte accélération, à la suite d'instabilités se produisant à leur interface. Ces fluides sont contenus initialement dans un volume (16) d'une chambre d'observation (9, 10) et séparés par un diaphragme (11).

L'invention vise à retirer le plus rapidement possible ce diaphragme (11) en début d'expérience. Cette extraction se fait, après mise en pression de l'enceinte étanche (1) du déverrouillage d'un axe (24), par déplacement brusque de cet axe à l'aide d'un piston (26) sous haute pression.

L'appareillage étend les conditions d'expérimentation de l'étude des "instabilités de Taylor".

./...

FIG. 1

La présente invention est relative au domaine de la physique des fluides et, plus particulièrement, à l'étude par observation optique de l'évolution des phénomènes d'instabilités se produisant à l'interface de séparation de deux fluides de densités différentes soumis à une accélération non nulle.

Jusqu'à présent, cette étude, dite des "instabilités de Taylor", est toujours restée limitée au cas où les deux fluides sont soumis à l'accélération du champ de gravité terrestre et met en oeuvre un appareillage simple comportant essentiellement une chambre d'observation à faces parallèles contenant les deux fluides séparés initialement par un diaphragme, généralement de forme sinusoïdale, qu'un dispositif simple extrait en début d'expérience pour mettre au contact l'un de l'autre les deux fluides de densités différentes.

La présente invention a pour but d'étendre le champ de cette étude dans des conditions d'expérimentation beaucoup plus larges, et principalement sous des accélérations, nettement supérieures à celles du champ de gravité naturel, lesdites accélérations étant obtenues par l'application sur l'un des fluides d'une pression importante pouvant atteindre plusieurs dizaines de bars.

L'invention a pour but plus précis de résoudre le problème devenant alors très critique, de l'extraction, en un temps aussi faible que possible, du diaphragme séparant, avant le début de l'expérience, les deux fluides sous forte pression.

A cet effet, l'invention a pour objet un appareillage pour l'observation optique de l'évolution des phénomènes d'instabilités entre deux fluides de

B 7614.3  AM

densités différentes soumis à de fortes pressions initiales du type comportant une chambre d'observation à faces parallèles contenant les deux fluides séparés initialement par un diaphragme et caractérisé essentiellement en ce que, en combinaison : ladite chambre d'observation est disposée à l'intérieur d'une enceinte étanche munie de moyens de mise en pression statique et dont une face est constituée d'un hublot d'observation optique parallèle aux deux faces parallèles de la chambre d'observation ; ledit diaphragme est de forme cylindrique droite et attelé à un axe mécanique d'extraction, les axes géométriques dudit diaphragme et dudit axe d'extraction étant perpendiculaires aux faces de ladite chambre d'observation, ledit axe d'extraction coulissant avec étanchéité à travers la paroi de ladite enceinte de pression opposée audit hublot, et une partie de l'axe d'extraction extérieure à l'enceinte de pression est solidaire respectivement : d'un piston coulissant à l'intérieur d'un cylindre et susceptible d'être actionné par un fluide à haute pression pour entraîner l'axe d'extraction vers l'extérieur de l'enceinte, d'un dispositif mécanique de verrouillage et déverrrouillage de l'axe d'extraction, et d'un dispositif d'arrêt en fin de course de l'axe d'extraction.

La mise en oeuvre de cet appareillage est la suivante : initialement, on met en place le diaphragme de séparation des deux fluides. L'axe d'extraction, solidaire du diaphragme, est alors verrouillé. On remplit ensuite, avec un premier fluide, la partie inférieure de la chambre d'observation et on procède à l'élimination des poches gazeuses pouvant subsister sous le diaphragme. On remplit ensuite, avec un second fluide de densité différente de celle du premier, la partie supérieure de la chambre d'observation. L'en-

3 **0097597**

ceinte contenant cette chambre est alors mise progressivement en pression par l'introduction d'un fluide gazeux et ceci jusqu'à une pression désirée. De même le fluide à haute pression est introduit dans un cylindre contenant le piston précité solidaire de l'axe d'extraction. Lorsque la haute pression choisie, qui peut être différente de celle de l'enceinte, est atteinte dans ce cylindre, le dispositif de déverrouillage de l'axe est actionné. L'axe d'extraction est alors libéré et propulsé avec une force très élevée pour extraire le diaphragme. Lorsque le diaphragme est complètement retiré de la chambre d'observation, le dispositif d'arrêt en fin de course intervient pour stopper l'axe mécanique d'extraction.

L'exposé qui précède fait bien comprendre les avantages permis par l'appareillage de l'invention dont l'organisation caractéristique permet optimalement de rendre distinctes les unes des autres les différentes fonctions à mettre en oeuvre.

En premier lieu, l'enceinte étanche de surpression statique autonome, renfermant la chambre d'observation, peut être dimensionnée et équipée de telle manière qu'elle permette la création de valeurs de surpressions aussi élevées que désirées pour étendre le champ d'expérimentation.

En second lieu, la force d'entraînement de l'axe mécanique d'extraction du diaphragme peut être aussi élevée que nécessaire en choisissant en conséquence la surface du piston solidaire de cet axe et la valeur de la haute pression du fluide qui l'actionne. On pourra ainsi diminuer jusqu'à une valeur minimale acceptable la durée d'extraction du diaphragme.

L'invention a pour autre but de permettre le déclenchement et le déroulement automatiques d'un

B 7614.3 AM

certain nombre de fonctions à partir d'un repère de temps initial corrélé avec le début d'une expérience, c'est-à-dire l'extraction du diaphragme.

A cet effet, l'invention a pour autre objet un appareillage du type précité, caractérisé en ce qu'une partie de l'axe d'extraction est solidaire d'une lame, percée de fentes calibrées et d'espacements connus, et susceptibles de se déplacer entre une source de rayonnement et un récepteur de ce rayonnement pour engendrer un train d'impulsions image du déplacement du diaphragme.

La première impulsion du train précité peut commander notamment le déclenchement automatique d'un dispositif de marquage du film, la caméra de prise de vues ayant été préalablement déclenchée, la vitesse de prise de vues étant repérée par une base de temps s'inscrivant en permanence sur le film.

L'invention a encore pour autre but de permettre de faire varier les conditions d'instabilités provoquées.

A cet effet, l'invention a encore pour autre objet un appareillage du type précité, caractérisé en ce que la partie inférieure de ladite chambre d'observation est reliée par une canalisation à un vase d'expansion à amortissement réglable.

Les buts, objets et avantages exposés ci-dessus de l'invention ainsi que d'autres connexes, seront mieux compris à l'aide de la description qui suit d'un mode particulier de mise en oeuvre de l'invention.

On se référera aux dessins annexés, sur lesquels :
- la figure 1 est une vue schématique en coupe longitudinale axiale de l'ensemble de l'appareillage selon l'invention,

- la figure 2 est une vue schématique en coupe par II-II de l'appareillage de la figure 1.

L'appareillage comprend une première partie constituée par l'enceinte de surpression statique. Celle-ci est formée par une chambre cylindrique circulaire 1 dont une face frontale est fermée par un hublot d'observation 2 réalisé en verre épais ou en une matière plastique telle que celle connue sous la dénomination commerciale de plexiglas.

L'intérieur de l'enceinte est connecté, par l'intermédiaire d'une vanne d'alimentation 3, à une source de fluide à haute pression 4, par exemple de l'air comprimé pouvant atteindre des pressions expérimentales de 20, 40, 60 et même 100 bars.

Un manomètre 5 indique la pression de cette source de fluide à haute pression.

Après expérience, l'enceinte est décompressée par ouverture d'une vanne d'échappement 6.

Différents capteurs de pression 7 sont prévus pour mesurer en différents endroits les pressions en cours d'expérience et permettre leur enregistrement.

La chambre d'observation proprement dite est logée à l'intérieur de l'enceinte 1. Cette chambre, supportée par un socle 8 est formée d'un bloc inférieur 9 et d'un bloc supérieur 10 venant s'ajuster juste au-dessus de lui avec interposition du diaphragme 11. L'étanchéité entre les blocs 9 et 10 est assurée à la fois par la présence du diaphragme 11 et également grâce à des joints toriques d'étanchéité schématisés par la référence 12.

L'assemblage des blocs 9 et 10 est maintenu, après mise en place du diaphragme 11, à l'aide de colonnettes schématisées par la référence 13.

Dans l'exemple représenté, le diaphragme a, vu en coupe, une forme d'arc de cercle. L'axe géométrique du cylindre qu'il forme est perpendiculaire aux deux faces parallèles 14 et 15 de la chambre d'observation.

Il est bien évident que la forme en coupe du diaphragme pourrait être différente : plane, sinusoïdale, ou tout autre.

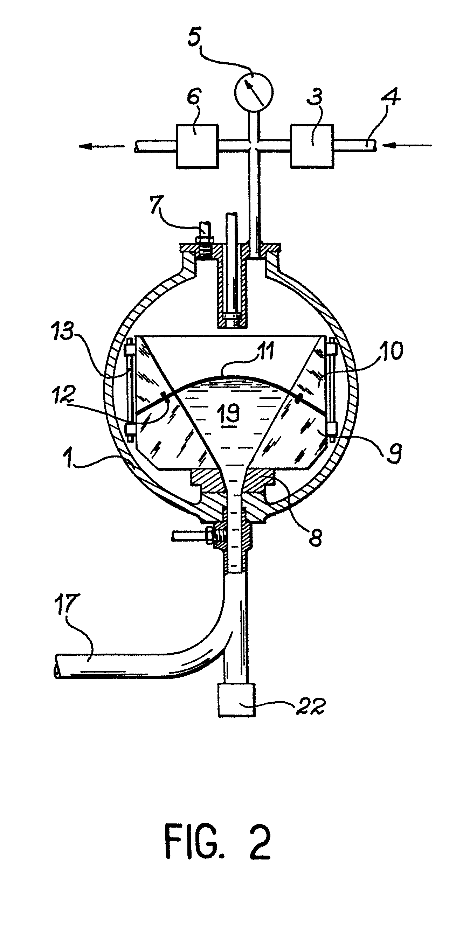

Dans cet exemple, le volume intérieur utile 16 de la chambre d'observation, comme on le voit sur la figure 2, est convergent vers le bas et se raccorde à l'entrée de forme conséquente ménagée dans le socle 8. De même, la forme de ce volume intérieur utile 16 pourrait être autre.

La partie inférieure de ce volume utile 16 communique par une canalisation 17, avec un vase d'expansion 18.

Le fluide 19, par exemple le plus léger, occupe tout le volume, à l'intérieur de la chambre d'observation, situé au-dessous du diaphragme 11 et passe par la canalisation 17 vers le vase d'expansion 18 où il est surmonté par une lame de gaz, par exemple d'air, 20 qui, lors de l'expérience, exerce une force de freinage sur l'écoulement du fluide, réglable par l'épaisseur initiale de cette lame de gaz.

Un capteur 21 mesure la pression de la lame de gaz 20.

Selon une caractéristique connexe de l'invention, il est prévu un dispositif 22 de piège à bulles en-dessous du bloc inférieur 9 de la chambre d'observation. Ce piège permet d'extraire les bulles de gaz qui, après le remplissage en liquide léger, adhèrent au diaphragme 11 dans la partie haute de la chambre inférieure. Ce piège est constitué d'un orifice obturé par un tampon en matériau élastique. Cet orifice permet d'introduire, à travers le tampon, l'une des extrémités d'un tube capillaire métallique jusqu'au niveau de la bulle. Celle-ci est aspirée par l'autre extrémité du capillaire au moyen d'une poire. Le capillaire est ensuite retiré. Un bouchon métallique ferme l'orifice pendant les expériences.

Le diaphragme 11 est relié, par un attelage 23, à un axe mécanique d'extraction 24 du diaphragme.

Cet axe 24 coulisse avec étanchéité dans la paroi frontale 25 de l'enceinte de surpression 1.

L'appareillage comprend, en combinaison avec la première partie décrite ci-dessus, une seconde partie qui constitue le système de commande du déplacement de l'axe 24 d'extraction du diaphragme.

Ce système comprend tout d'abord l'organe moteur de l'axe 24 qui est constitué d'un piston 26, solidaire de l'axe 24, et susceptible de coulisser à l'intérieur d'un cylindre 27 équipé d'une canalisation d'admission 28 d'un fluide haute pression, par exemple de l'air, et d'une canalisation d'échappement 29.

Ce système comprend ensuite un organe de verrouillage-déverrouillage en position axiale de l'axe 24.

Dans l'exemple décrit, cet organe est constitué de la façon suivante : des billes 30 sont logées dans une gorge rainurée 31 usinée dans l'axe 24. Ces billes 30 sont, en position de verrouillage, engagées à l'intérieur de la gorge 31 sous l'action d'un piston 32 présentant un alésage interne, sur sa partie représentée à gauche sur la figure , maintenant précisément ces billes 30 dans la rainure 31. La position ainsi représentée du piston 32 est obtenue par l'action d'un fluide sous pression admis par une canalisation 33. Après mise en place dudit piston, l'admission de ce fluide est interrompue.

Le déverrouillage s'obtient en effectuant

B 7614.3 AM

l'admission d'un fluide dans la canalisation de déverrouillage 34. Alors le piston 32 se déplace vers la gauche et un alésage 35 plus large se présente au regard des billes 30 qui sortent alors de la gorge rainurée 31 et libèrent l'axe d'extraction 24.

Le système de commande du déplacement de l'axe d'extraction 24 comprend enfin un organe d'arrêt en fin de course de cet axe 24. Cet organe, dans cet exemple, comprend un cône mâle consommable 36, réalisé en un matériau se déformant en consommant de l'énergie, aluminium par exemple, et venant s'encastrer en s'écrasant en fin de course dans un cône femelle 37. Pour éviter de perturber par des chocs l'expérience en cours, on peut isoler mécaniquement du reste de l'appareillage le support du cône d'arrêt 37. Par exemple, ce support 38 est monté sur glissières 39 avec ressorts amortisseurs 40.

L'appareillage comprend enfin, selon une autre caractéristique avantageuse de l'invention, un organe de mesure de déplacement et vitesse de l'axe 24 d'extraction de diaphragme.

Cet organe est constitué très simplement d'une lame 41, solidaire de l'axe 24, présentant des fentes 42 calibrées et espacées les unes des autres d'une valeur connue. Une source de rayonnement 43, par exemple une diode électroluminescente, est disposée d'un côté de la lame 41, tandis qu'un récepteur 44 de ce rayonnement, par exemple un phototransistor, est disposé de l'autre côté de la lame. Lors du déplacement de l'axe 24, et donc de la lame 41, l'ensemble de ces moyens alimente une électronique appropriée de tout type connu qui engendre un train d'impulsions.

B 7614.3 AM

Le mode de fonctionnement de l'appareillage décrit a été exposé ci-dessus de manière générale, de sorte qu'il est compris aisément à la suite de la description précédente.

On précisera simplement que, en début d'expérience, le diaphragme affleure à, ou se trouve légèrement en retrait de la face avant de la chambre d'observation. Cette condition initiale est prévue pour que lorsque le bord gauche du diaphragme arrive juste à l'entrée du volume intérieur utile 16 de la chambre, l'axe d'extraction 24 ait pu avoir le temps d'atteindre sa vitesse maximale pour réduire au minimum le temps réel d'extraction du diaphragme de ce volume utile 16.

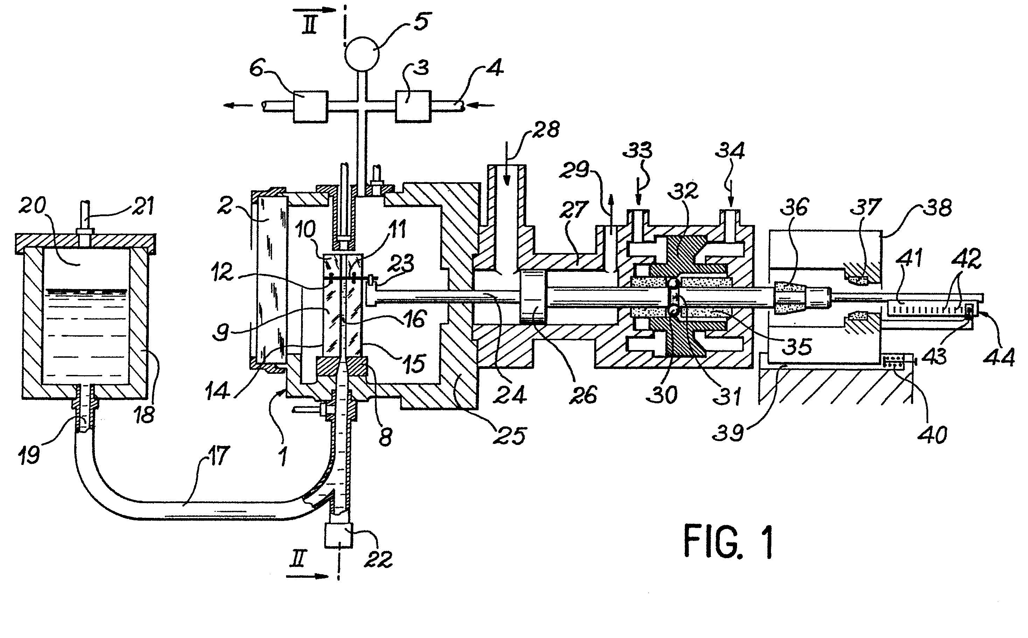

A titre de précision expérimentale, on peut dire que, pour des pressions de 40 bars s'exerçant dans le cylindre d'extraction 27, on a obtenu des vitesses d'extraction de diaphragme de 20 mm/ms. Avec une largeur $\underline{l}$ (figure 1) d'une valeur de 7 mm du volume intérieur utile 16 de la chambre d'observation, on obtient un temps de parcours de l'ordre de 0,34 ms pour extraire le diaphragme de ce volume utile 16.

L'invention n'est pas limitée à l'exemple particulier décrit ci-dessus.

REVENDICATIONS

1. Appareillage pour l'observation optique des phénomènes de mélanges provoqués par instabilités entre deux fluides de densités différentes soumis à de fortes accélérations, du type comportant une chambre d'observation à faces parallèles contenant les deux fluides séparés initialement par un diaphragme et caractérisé essentiellement en ce que, en combinaison : ladite chambre d'observation (9, 10) est disposée à l'intérieur d'une enceinte étanche (1) munie de moyens de mise en pression statique (3,4) et dont une face est constituée d'un hublot d'observation optique (2) parallèle aux faces parallèles de la chambre d'observation, ledit diaphragme (11) est de forme cylindrique droite et attelé à un axe mécanique d'extraction (24), les axes géométriques dudit diaphragme (11) et dudit axe d'extraction (24) étant perpendiculaires aux faces de ladite chambre d'observation (9, 10), ledit axe d'extraction (24) coulissant avec étanchéité à travers la paroi (25) de ladite enceinte de pression (1) opposée audit hublot (2), et une partie de l'axe d'extraction (24) extérieure à l'enceinte de pression (1) est solidaire respectivement : d'un piston (26) coulissant à l'intérieur d'un cylindre (27) et susceptible d'être actionné par un fluide à haute pression (28) pour entraîner l'axe d'extraction vers l'extérieur de l'enceinte, d'un dispositif mécanique de verrouillage et déverrouillage de l'axe d'extraction (30, 31, 32, 33, 34), et d'un dispositif d'arrêt en fin de course (36, 37, 38) de l'axe d'extraction.

2. Appareillage selon la revendication 1, caractérisé en ce que le dispositif d'arrêt en fin de course de l'axe d'extraction (24) du diaphragme (11) comprend un cône (36), réalisé en un matériau susceptible de se déformer en consommant une grande énergie, calé sur l'axe (24) et venant s'encastrer en fin de course dans un cône femelle (37).

3. Appareillage selon la revendication 1, caractérisé en ce qu'une partie de l'axe d'extraction (24) est solidaire d'une lame (41), percée de fentes (42) calibrées et d'espacements connus, et susceptible de se déplacer entre une source de rayonnement (43) et un récepteur de ce rayonnement (44) pour engendrer un train d'impulsions image du déplacement du diaphragme (11).

4. Appareillage selon la revendication 1, caractérisé en ce que la partie inférieure de ladite chambre d'observation (9, 10) est reliée par une canalisation (17) à un vase d'expansion (18) à amortissement réglable.

FIG. 1

1/2

0097597

0097597

FIG. 2